# EUROPEAN PATENT SPECIFICATION

(11) **EP 3 696 142 B1**
(45) Date of publication and mention of the grant of the patent: **03.04.2024**
(21) Application number: 19156620.7
(22) Date of filing: 12.02.2019
(51) Int. Cl.: C01B 25/45, C05B 11/08, C02F 11/04, C02F 1/38, C02F 1/52, C02F 11/143, C02F 101/10

(54) **METHOD FOR EXTRACTING PHOSPHORUS FROM ORGANIC RESIDUES**
VERFAHREN ZUR EXTRAKTION VON PHOSPHOR AUS ORGANISCHEN RESTEN
PROCÉDÉ D'EXTRACTION DE PHOSPHORE DANS DES RÉSIDUS ORGANIQUES

(43) Date of publication of application: 19.08.2020
(73) Proprietor: Stichting Wageningen Research, 6708 PB Wageningen (NL); Nijhuis Water Technology B.V., 7007 CD Doetinchem (NL)
(72) Inventor: REGELINK, Inge Catharina, 6999 BC HUMMELO (NL); SCHOUMANS, Oscar Frédéric, 6708 RE WAGENINGEN (NL); SMITH, Gerrit Oopke Jan, 6971 VB BRUMMEN (NL); EVERLO, Sjoerd Johannes Gerardus, 8102 MG RAALTE (NL)
(74) Representative: Nederlandsch Octrooibureau

(56) References cited:
- EP-A1- 1 593 417
- EP-A1- 3 078 641
- JP-A- 2003 300 095
- US-A1- 2017 327 427
- GYUTAE KWON ET AL: "Recovery of ammonia through struvite production using anaerobic digestate of piggery wastewater and leachate of sewage sludge ash", ENVIRONMENTAL TECHNOLOGY, vol. 39, no. 7, 3 April 2018 (2018-04-03), pages 831-842, XP055605094, GB ISSN: 0959-3330, DOI: 10.1080/09593330.2017.1312550

## Description

### Technical field

The present invention relates to a method for extracting phosphorus from organic residues, particularly a method for extracting phosphorus from organic matter, the method comprising:
(a) providing phosphorus-containing organic matter, wherein the organic matter further contains calcium and/or iron;
(b) combining the organic matter provided in step (a) with acidic sulphate-containing aqueous solution to solubilize phosphorus, to allow calcium sulphate in the form of suspended gypsum particles and/or iron sulphate to form, thereby obtaining a slurry;
(c) separating the slurry obtained in step (b) into a solid fraction having a water content of at 10 most 80 wt.%, and a liquid fraction having a water content of at least 80 wt.%;
(d) combining the liquid fraction as obtained in step (c) with magnesium-containing base to obtain struvite precipitate.

### Background of the invention

Organic residues, in particular manure and sewage sludge, are rich in phosphorus. However, in areas with intensive livestock farming, the production of phosphorus-containing organic residues is such that the amount of phosphorus therein exceeds the amount that can be applied on fields without causing over-fertilisation.

In view thereof, it is common to transport manure to regions with a demand for phosphorus. Transport over long distances is costly and energy-consuming. Accordingly, the organic residues are separated into a solid and a liquid fraction by means of a mechanical process such as filtration or centrifugation. This leads to a liquid and a solid fraction of which the latter contains roughly 70% of the phosphorus. Although mechanical separation lowers transportation costs, it is still far from optimal since the solid fraction obtained after mechanical separation generally still consists of over 65 wt.% of water, and further drying steps to form pellets are energy-consuming and the economic feasibility thereof is thus dependent on the presence of local residual waste heat.

An alternative is to further reduce the amount of phosphorus in the organic residues such that they can be applied locally. Organic residues are an important source of organic matter. Organic matter helps to sustain soil quality. However, the application of organic residues on fields is often restricted due to high amounts of phosphorus contained therein. Organic residues with a reduced phosphorus content would be valuable soil amendments.

To this end, WO2015/162163 describes a method for recovery of phosphorus from aqueous residual materials, in particular manure. The method describes acidification of manure to release phosphorus followed by solid-liquid separation and a subsequent precipitation step to recover the phosphorus from the liquid stream through an increase in the pH. The phosphorus is recovered from the acid fraction in the form of struvite.

However, the efficiency of this method, in particular the efficiency in which the phosphorus is recovered, is far from optimal. Moreover, the method generates a considerable stream of waste water which remains after the extraction and recovery step. The method therefore consumes a lot of clean water and produces a large volume of waste water. This waste water is rich in nutrients and salts leached from the biowaste and further contains a large amount of salts due to the use of inorganic or organic acids. Discharge of this wastewater can therefore be problematic.

From EP 3 078 641 A1, a phosphorus recovery system for recovering phosphorus from a phosphorus-containing medium, in particular from sewage sludge and / or waste water is known, wherein at least one mobile process unit for the chemical treatment of the phosphorus-containing medium is present, which is temporarily connected to a stationary system, which provides the phosphorus-containing medium. When seen in the process direction of the medium, the mobile process unit has a redissolving container for redissolving phosphate in the supplied phosphorus-containing medium, a collecting container for collecting the partially purified medium and a precipitation container to precipitate a phosphate-rich product. For filtering the medium, the mobile processing unit is coupled to a filter press, which is also mobile.

However, the solids fraction separated off by the filter press has a relatively high concentration of phosphate, making it less suitable for use as fertilizer or a peat replacement.

A phosphorus extraxtion and recovery system is also known from US 2017/327427 A1. However, in this system the solids fraction which is nutrient-deficient is stored, rather than processed in order to make it suitable for reuse.

Therefore, there remains a need to develop new means to extract phosphorus from organic matter, in particular manure or sewage sludge, wherein at least one of the above-mentioned problems are overcome.

### Detailed description of the invention

The present disclosure relates to a method for extracting phosphorus from organic matter, as defined in claim 1. The method comprising:
(a) providing phosphorus-containing organic matter, wherein the organic matter preferably further contains calcium and/or iron;
(b) combining the organic matter provided in step (a) with an acidic sulphate-containing aqueous solution to solubilize phosphorus, allow calcium sulphate and/or iron sulphate to form, thereby obtaining a slurry having a water content of at least 75, at least 80 or at least 85 wt.%;
(c) separating the slurry obtained in step (b) into a solid fraction having a water content of preferably at most 60, at most 70, or at most 75 wt.%, and a liquid fraction having a water content of at least 80, or at least 90 or even at least 95 wt.%;
(d) combining the liquid fraction as obtained in step (c) with a base, preferably a magnesium-containing base to obtain phosphorus precipitate, preferably in the form of struvite.

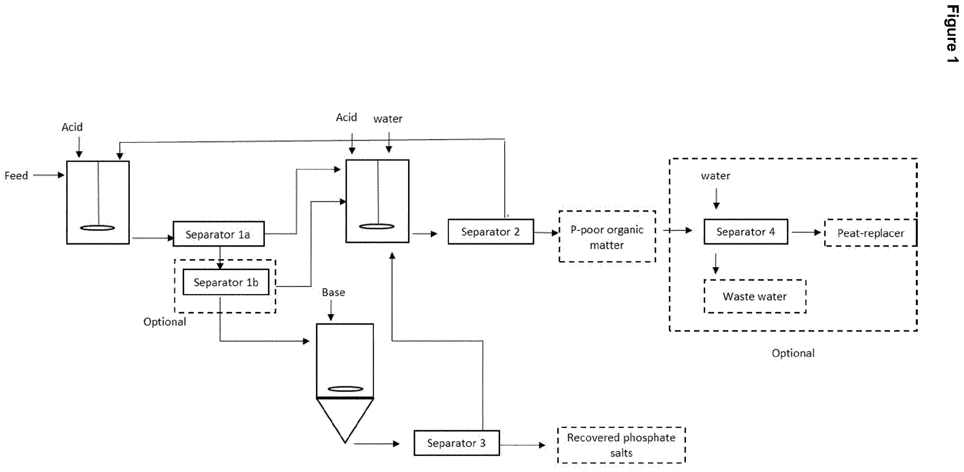

Figure 1 shows a flow chart of an embodiment of the method of the present disclosure. The method is preferably operated in a continuous mode, but can also be operated in a batch mode.

As can be seen, the method is preferably based on the recovery in step (d) of solubilized phosphorus by means of the addition of a magnesium-containing base to form struvite, i.e. magnesium ammonium phosphate. An advantage of struvite formation is that struvite forms crystals which can be easily dewatered whereas dewatering of phosphorus recovered as e.g. calcium phosphate is problematic.

Struvite recovery is a well-known process which is already operated in full-scale reactors for decades. However, struvite installations typically treat calcium-poor and iron-poor waste streams. So far, struvite recovery is generally not considered for calcium-rich, iron-rich or acid streams because struvite formation then tends to be inefficient.

The present inventors surprisingly found that the addition of sulphate-containing process water can lead to conditions under which the calcium and/or iron is bound with sulphate in the form of gypsum and/or iron sulphate and hence, does not interfere with the struvite precipitation process. In particular, sulphuric acid is applied as the acid in step (b) or step c', such that nearly all calcium and/or iron can be bound with sulphate.

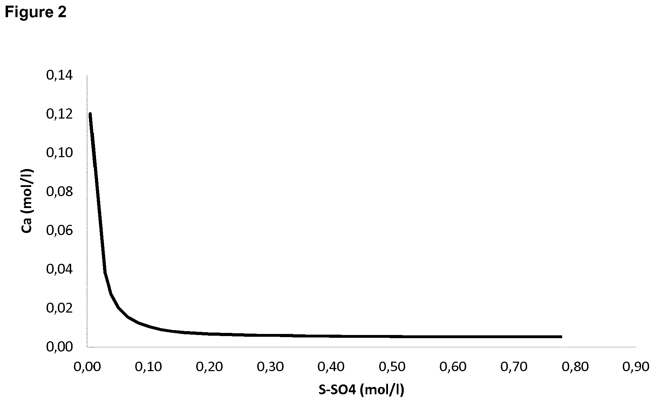

Apparently, and unexpectedly, only truly dissolved calcium and/or iron can interfere with struvite formation whereas calcium in the form of fine gypsum particles, or iron in the form of iron sulphate surprisingly does not interfere with struvite formation. This is further supported by the present inventors by model calculations as can be seen in Figure 2, showing that the dissolved calcium concentration can be reduced by means of a higher dissolved sulphate concentration.

Also in the method of WO2015/162163, as discussed herein before, struvite formation is hampered by the presence of calcium ions extracted from the biowaste. In WO2015/162163, an attempt is made to partly overcome this problem through addition of chelating ions, such as humic acid, citric acid, nitrilotriacetic acid, alaninediacetate, citrates, gluconates and / or methylglycine diacetic acid, which may form complexes with calcium.

However, a drawback of the addition of chelating ions is that they are costly. In contrast, in the method according to the present disclosure, sulphate-containing water is typically readily available as a waste stream, which was thus surprisingly found to be reusable. In contrast, the prior art has problems with the processing of waste water due to the large amount of dissolved salts therein, including sulphate ions.

Step (a) of the method according to the present disclosure provides phosphorus-containing organic matter, preferably wherein the organic matter further contains calcium and/or iron. The organic matter may be any organic matter, i.e. matter comprising organic compounds (chemical compounds containing carbon) which are for example derived from remains and/or waste products from plants and/or animals (including humans). The method according to the present disclosure is particularly well-suited for applying, in step (a), phosphorus-containing organic matter comprising (dissolved) calcium and/or (dissolved) iron, for example calcium phosphate and/or iron phosphate.

The terms "phosphorus", "calcium", "iron", and the like as used herein refer to the chemical elements and include all compounds and salts comprising such elements. Preferably, the phosphorus-containing organic matter provided in step (a) contains
- between 0.02 and 4, or between 0.05 and 3, or between 0.1 and 2 wt.% phosphorus, typically in the form of inorganic phosphate, with respect to the weight of the chemical element relative to the total weight of the wet organic matter and/or between 0.1 and 10, or between 0.2 and 7, or between 0.5 and 5 wt.% phosphorus, typically in the form of inorganic phosphate, with respect to the weight of the chemical element relative to the total dry weight of the organic matter;
- between 0.5 and 20, or between 1 and 15, or between 1.5 and 10 wt.% calcium, typically in the form of calcium phosphate, with respect to the weight of the chemical element relative to the total weight of the wet organic matter and/or between 0.02 and 10, or between 0.2 and 43, or between 0.5 and 3 wt.% calcium, typically in the form of calcium phosphate, with respect to the weight of the chemical element relative to the total dry weight of the organic matter; and/or
- between 0.1 and 50, or between 1 and 15, or between 2 and 10 wt.% iron, typically in the form of iron phosphate, with respect to the weight of the chemical element relative to the total weight of the wet organic matter and/or between 0.02 and 10, or between 0.2 and 3, or between 0.5 and 2 wt.% iron, typically in the form of iron phosphate, with respect to the weight of the chemical element relative to the total dry weight of the organic matter; and/or
- between 0.1 and 50, or between 1 and 15, or between 2 and 10 wt.% ammonium, with respect to the weight of the chemical group relative to the total weight of the wet organic matter and/or between 0.02 and 10, or between 0.2 and 3, or between 0.5 and 2 wt.% ammonium, with respect to the weight of the chemical group relative to the total dry weight of the organic matter.

The phosphorus-containing organic matter provided in step (a) preferably is or comprises at least 25, 50, 75, 90, 95, 99 wt.% sewage sludge and/or animal excrements, preferably manure such as pig manure and/or cow manure. Sewage sludge can be understood as referring to (semi-solid) matter that is produced as a by-product during sewage treatment of industrial and/or municipal waste-water.

In a preferred embodiment of the present disclosure, part or whole, or at least 25, 20, 75, 90, 95, 99 wt.% of the phosphorus-containing matter provided in step (a) has been (previously) subjected to anaerobic digestion, e.g. to increase inorganic phosphorus content.

The method according to the present disclosure is preferably applied to a digestate stream which results from (previous) anaerobic digestion of the phosphorus-containing matter. For example, step (a) may provide phosphorus-containing matter which has been subjected to (anaerobic) digestion, wherein the organic matter is one or a combination of the following: pig manure, cow manure, agro-industrial residues, bio-waste and organic residues. Anaerobic digestion is thus preferred as a pre-treatment, because the digestion process typically leads to hydrolysis of at least part of the organic phosphorus into inorganic phosphorus.

Additionally and/or alternatively, part or whole, or at least 25, 20, 75, 90, 95, 99 wt.% of the phosphorus-containing matter provided in step (a) has been subjected to a solid-liquid separation step, preferably to reduce ammonium content and/or hydrogen carbonate content. The reduction in NH₄ and/or HCO₃ is beneficial in order to reduce acid consumption in subsequent steps.

Preferably, the organic matter provided in step (a) has a dry matter content of at least 10, 20, 25, 30, 35, 40 wt.% or between 10-60, 15-45, 20-40, 25-35 wt.%, as measured with respect to the weight of the organic matter excluding its water relative the total weight of the organic matter including its water. This can optionally be achieved by subjecting organic matter to a mechanical separation process to yield a solid and a liquid fraction. The solid fraction then typically contains most of the phosphorus while generally having a much lower acid buffering capacity compared to a non-separated stream, and can thereafter be used in step (a) of the method according to the present disclosure.

The solid-liquid separation step and/or mechanical separation step as referred to above may be performed by
- combining an organic feed with water to obtain a slurry having a water content of at least 70, 75, 80, 85, 90, 95 wt.%, or at most 99, 98, 97 wt.% relative to the weight of the slurry;
- separating the slurry obtained in the first step into a solid fraction having a water content of at most 50, 60, 70, 80, 90 wt.% (preferably at least 1,2,4 wt.%), relative to the total weight of the solid fraction, and a liquid fraction having a water content of at least 70, 80, 90, 95, 99 wt.%, relative to the total weight of the liquid fraction.

Further, additionally and/or alternatively, part or whole, or at least 25, 20, 75, 90, 95, 99 wt.% of the phosphorus-containing matter provided in step (a) has been subjected to heat treatment, wherein the phosphorus-containing matter provided in step (a) is heated to a temperature of between 50-100, preferably at least 50, 60, 60, or 70 °C and/or between 60-100, 50-90, 60-90, 60-80, 65-75 °C.

Such heat treatment can be applied in order to further sanitize the organic matter, and/or to kill/inactivate at least 50, 60, 70, 80, 90, 95, 99, 100% of bacteria contained in the organic matter. Heat treatment is an optional step in the method according to the present disclosure, but is particularly preferred since it enables operating subsequent steps in the method at a temperature of between 30-50 °C without usage of an additional energy source.

Step (b) of the method according to the present disclosure involves combining with or adding acidic sulphate-containing aqueous solution, e.g. acid and/or sulphate-containing water, to the organic matter provided in step (a) to solubilize phosphorus, allows calcium sulphate and/or iron sulphate to form, and obtain a slurry having a water content of at least 70 or at least 75, 80, 85, 90, 95, or 99 wt.%, or between 70-99, 80-95, 85-95, 88-96, or 90-94 wt.% with respect to the total weight of the slurry.

Step (b) of the method thus may reduce the pH, preferably by combining with or adding acid, more preferably inorganic acid, most preferably sulphuric acid, to lower the pH to a value lower than 6, 5.5, 5, 4.5, 4, 3.5, 3, 2 or between 2-5, 2.5-4.5, 3-4, 3.0-5.5, 4.5-5.5, preferably 5, so as to solubilize phosphorus, e.g. inorganic phosphorus, particularly phosphate. The recited pH is generally sufficient to solubilize more than 90% or even more than 95% of the phosphorus from the organic matter, such as from anaerobically digested pig manure.

Additionally and/or alternatively, sulphate-containing water is added to the organic matter provided in step (a) which allows forming of calcium sulphate (gypsum) in case calcium was present, and/or forming of iron sulphate in case iron was present, which advantageously lowers the calcium and/or iron level and thus may reduce inhibitory effects of calcium and/or iron on struvite precipitation as preferably performed later in the method according to the present disclosure.

Calcium sulphate (gypsum) and/or iron sulphate formation is also desirable since it offers the possibility to recover the calcium and/or iron sulphate, for example together with the precipitated phosphate or as a separate product, preferably through removal of fine gypsum particles from the liquid fraction e.g. through a settler, centrifuge or similar apparatus. As such, it can lower the sulphate concentration in the organic end product.

Step (c) of the method according to the present disclosure involves separating the slurry obtained in step (b) into a solid fraction having a water content of at most 25, 30, 35, 40, 45 or 45 wt.% (preferably at least 1,2, 3, 4, 5 wt.%), with respect to the total weight of the solid fraction, and a liquid fraction having a water content of at least 60, 75, 80, 85, 90, 95, or 99 wt.%, with respect to the total weight of the liquid fraction.

In case the aforementioned separation step is performed by a screw press, the liquid fraction is preferably subjected to an optional second solid-liquid separation based on e.g. gravitational force which may further remove fine suspended particles (such as gypsum-comprising particles).

The term "slurry" as used herein can be understood as meaning a watery mixture comprising insoluble matter, preferably comprising at least 60, 70, 80, 90, 95, 99 wt.% water, or between 70-99, 75-90, 75-85 wt.% water.

In step (c), the slurry obtained in step (b) is thus be subjected to a solid-liquid separation step, by means of a screw press, a centrifuge, or another apparatus with a similar separation efficiency. Accordingly, the slurry can be separated into
- a liquid fraction with a phosphorus content, typically at least 1000, 1200, 1400, 1600, 1800, 2000, 2200, 2400, 2600, 2800 mg/L or between 1000-4000 mg/L, 1200-3500 mg/L, 1300-3300 mg/L, 1400-3300 mg/L or 1500-3000 mg/L, measured with respect to the weight of the chemical element phosphorus present in 1 L and preferably as present as ortho-phosphate; and
- a solid fraction with a reduced phosphorus content, typically at most 100, 200, 300, 400, 500, 600, 700, 800, 900, 1000, 1200, 1500, 1800, 2000, 2200, 2400, 2600, 2800, 3000 mg/kg or between 0-3000, 0-2800, 0-2700, 0-2600, 0-2500, 0-2400, 0-2300, 0-2200, 0-2100, 0-2000, 0-1000, 0-800, 0-700, 0-600, 0-500, 0-100 mg/kg measured with respect to the weight of the chemical element phosphorus present in 1 kg of wet product and preferably as present as ortho-phosphate.

The solid fraction thus obtained can be a final or intermediate product of the method according to the present disclosure. The product may be used as soil amendment, and/or soil improver.

Step (d) of the method according to the present disclosure involves combining the liquid fraction as obtained in step (c) (and/or step (c") as discussed later herein) with a magnesium-containing base, for example a base and magnesium ions.

Preferably step (d) involves combining the liquid fraction as obtained in step (c) and/or step (c") with an (alkaline) base preferably chosen from the group consisting of magnesium hydroxide, calcium hydroxide, magnesium hydroxide, calcium hydroxide, or combinations thereof, but most preferably a magnesium-containing base to obtain phosphorus precipitate, preferably in the form of struvite.

Preferably in step (d), an amount of magnesium(-hydroxide) is used in the order of at least 500, 2000, 3000, 4000, 5000, 6000, 7000, 8000, 10000, 12000, 14000, 16000, 18000, 20000, 22000, 25000 mg/L liquid fraction or between 500-25000 mg/L, 600-2200 mg/L, 800-20000 mg/L, 900-18000 mg/L or 1000-15000, or 1000-25000 mg/L, measured with respect to the weight of the magnesium(-hydroxide salt) present in 1 L liquid fraction.

Step (d) may be performed in a precipitation reactor and/or preferably in the presence of ammonium (ions). Preferably, a pH is reached in step (d) of at least 6, 6.5, 7, 7.1,7.2, 7.3, 7.4, 7.5, 7.6, 7.7, 7.8, 7.9, preferably 8, or between 6-9, or between 7 and 8.5, or between 7 and 8, in order to form a phosphorus precipitate. The precipitation process is preferably performed in a conus-shaped reactor in order to increase the retention time of the precipitated particles and/or to stimulate particle growth. Step (d) may be performed at a temperature of between 20-70, 20-40, 30-40 degrees Celsius.

It is preferred to precipitate phosphorus with magnesium to form struvite, because larger particles are formed which are thus easier to separate from the liquid phase, when compared to calcium phosphate precipitate which has the tendency to form very small particles.

However, as mentioned herein before, struvite formation may be hampered by presence of calcium ions and/or iron ions. Apart from using sulphate-containing water in the method according to the present invention, the presence of calcium and/or iron may be even further reduced by using sulphuric acid in any one of the acidification steps, since sulphuric acids react with calcium to form gypsum and/or react with iron to form iron sulphate.

The accumulation of sulphate can thus lead to a reduction in the calcium concentration which is beneficial particularly in case phosphorus is recovered in the form of struvite. Formation of gypsum and/or iron sulphate can occur in the first acidification tank since here calcium and/or iron concentrations typically are elevated due to dissolution of calcium and/or iron from the organic matter.

Preferably, the precipitated phosphorus is removed from the bottom of the aforementioned precipitation reactor and subjected to a dewatering step based on filtration or by gravitational or centrifugal forces.

The (dewatered) phosphorus precipitate in step (d) may have a P₂O₅ content of at least 10, 11, 12, 13, 14, 15, 16, 17, 18,19, 20, 21,22, 23, 24, 25 wt.% based on total dry matter weight of the precipitate, which is sufficiently high to use is a phosphorus fertiliser or as a secondary raw material for fertiliser production.

The method according to the present disclosure can thus produce a phosphorus product with a high dry matter content in a cost-effective manner. The phosphorus precipitate, e.g. struvite, can be further isolated by means of gravitational force, filtration or centrifuge.

Further, the method contains additional steps (c') and (c"), particularly to further reduce phosphorus content in the solid fraction as previously obtained:
(c') combining the solid fraction obtained in step (c), which may still contain phosphorus, with acidic aqueous solution to solubilize (remaining) phosphorus, thereby obtaining a slurry preferably having a water content of at least 75, 80, or 85 wt.%;
(c") separating the slurry obtained in step (c') into a solid fraction having a water content of at most 80 wt.%, and a liquid fraction having a water content of at least 80 wt.%.

Accordingly, the method according to the present disclosure overcomes a further drawback of prior art methods wherein the organic residues are typically washed only once implying that the acid-treated and dewatered organic matter obtained still contains a substantial amount of phosphorus.

Preferably, after (c"), the method according to the present disclosure continues with steps (c"') and (c""), for example in order to further reduce the salt content of the solid fraction as previously obtained:
(c"') combining the solid fraction as obtained in step (c") with aqueous solution (preferably clean (tap) water e.g. not comprising more than 0.1 mol/L sulphuric acid) to obtain a slurry preferably having a water content of at least 75, 80 or 85 wt.%;
(c"") separating the slurry obtained in step (c‴) into a solid fraction having a water content of at most 70, 75, 80, 85 wt.%, and a liquid fraction having a water content of at least 75, 80, 85, 90, 95 wt.%.

As will be clear, in step (c') and/or (c"'), acid may be comprised and/or dissolved in the aqueous solution, or the acid can be provided as separate acetic composition, thereby providing acidic aqueous solution.

Step (c') and/or (c‴) of the method according to the present disclosure may thus involve combining with or adding acidic sulphate-containing aqueous solution, e.g. acid and/or sulphate-containing water, to the organic matter provided in step (a) to solubilize phosphorus, preferably allow calcium sulphate and/or iron sulphate to form, and obtain a slurry having a water content of at least 70 or at least 75, 80, 85, 90, 95, or 99 wt.%, or between 70-99, 80-95, 85-95, 88-96, or 90-94 wt.% with respect to the total weight of the slurry.

Step (c') and/or (c‴) of the method thus preferably reduces the pH, preferably by combining with or adding acid, more preferably inorganic acid, most preferably sulphuric acid, to lower the pH to a lower than 6, 5.5, or between 4.5-5.5, preferably 5, so as to solubilize phosphorus, e.g. inorganic phosphorus, particularly phosphate.

Additionally and/or alternatively, sulphate-containing aqueous solution is added to the solid fraction obtained in step (c) and/or (c") which allows forming of calcium sulphate (gypsum) in case calcium was present, and/or forming of iron sulphate in case iron was present, which advantageously lowers the sulphate concentration in the end products of the method according to the present disclosure. As the solid fraction of step (c') may contain calcium and/or iron, it is preferred that wherein the amount of sulphate is such that at least 60, 70, 80, 90, 95, 99% of the calcium and/or iron of the solid fraction is bound by forming calcium sulphate and/or iron sulphate.

The amount of sulphate preferably used in step (b) and/or step (c') and/or (c‴) of the method according to the present disclosure is preferably such that at least 50, 60, 70, 80, 90, 95, 99% of the calcium and/or iron is bound by forming calcium sulphate and/or iron sulphate. This may be achieved by sulphate concentration in the aqueous solution of at least 1000, 2000, 3000, 4000, 5000, 6000, 7000, 8000, 10000, 11000, 12000, 13000, 14000, 15000 mg/L or between 1000-20000 mg/L, 2000-19000 mg/L, 3000-17000 mg/L, 4000-16000 mg/L or 5000-15000 mg/L, measured with respect to the weight of the chemical element S present in 1 L.

Preferably, step (b) (and/or step (c')/(c‴) is performed at a temperature of between 25-90, 25-70, 30-60, 30-50, 30-40 °C, or at least 25, 30, or at least 40 °C. Such an elevated temperature may further enhance hydrolysis of insoluble organic phosphorus into soluble inorganic phosphorus and may further enhance calcium sulphate (gypsum) and/or iron sulphate precipitation.

Step (c") and/or (cʺʺ) of the method according to the present disclosure involves separating the slurry obtained in step (c') and/or (c"') into a solid fraction having a water content of at most 60, 65, 70, 75, 80 or 85 wt.%, with respect to the total weight of the solid fraction, and a liquid fraction having a water content of at least 85, 90, 95, or 99 wt.%, with respect to the total weight of the liquid fraction.

In case the aforementioned separation step is performed by a screw press, the liquid fraction is preferably subjected to an optional second solid-liquid separation based on e.g. gravitational force which may further remove fine suspended particles.

In step (c") and/or step (c""), the slurry as obtained in step (c') and/or (c‴) may thus be subjected to a solid-liquid separation step, preferably by means of a screw press, a centrifuge or another apparatus with a similar separation efficiency. Accordingly, the slurry can be separated into
- a liquid fraction with a phosphorus content, typically at least 10, 20, 50, 70, 90, 100, 120, 140, 160, 180,200,250,300,400, 500, 600, 700, 800, 1000, 1100, 1200, 1300, 1400, 1500 mg/L or between 10-1000 mg/L, 20-700 mg/L, 30-600 mg/L, 40-500 mg/L or 50-400 mg/L, measured with respect to the weight of the chemical element phosphorus present in 1 kg; and
- a solid fraction with a reduced phosphorus content, typically at most, 250, 500, 600, 700, 800, 900, 1000, 1200, 1300, 1400, 1500, 1600, 1700, 1800, 1900, 2000, 2100, 2200, 2300, 2400, 2500 mg/kg or between 0-2500, 0-2400, 0-2200, 0-2000, 0-1800, 0-1700, 0-1600, 0-1500, 0-1400, 0-1300, 0-1200, 0-1000, 0-900, 0-800, 0-700, 0-600, 0-500, 0-250 mg/kg measured with respect to the weight of the chemical element phosphorus present in 1 kg.

The solid fraction thus obtained can be a final or intermediate product of the method according to the present disclosure. The product may be used as soil amendment, and/or soil improver.

The product, particularly if derived from cow/pig manure and/or sewage sludge, can be characterized by:
- comprising organic matter (e.g. organic fibres), preferably for at least 50, 60, 70, 80, 90 wt.% with respect to the total (dry) weight of the product;
- having a dry matter content of between 5-80, 10-70, 10-60, 20-50, 25-45, 35-40 wt.% with respect to the total weight of the product;
- having a dry matter density of between 20-500, 50-300, 50-250, 100-200 kg/m³.
- having a pore volume of at least 50, 60, 70, 80, 90 vol.% (fraction of void space in the total volume of the product).

The product may be the solid fraction as obtained in step (c), step (c"), or step (c"'), and for example be used as soil improver, peat substitute, compost substitute and/or potting soil, e.g. in agriculture. The product may typically have a phosphorus content of at most 250, 500, 600, 700, 800, 900, 1000, 1200, 1300, 1400, 1500, 1600, 1700, 1800, 1900, 2000, 2100, 2200, 2300, 2400, 2500 mg/kg or between 0-2500, 0-2400, 0-2200, 0-2000, 0-1800, 0-1700, 0-1600, 0-1500, 0-1400, 0-1300, 0-1200, 0-1000, 0-900, 0-800, 0-700, 0-600, 0-500, 0-250 mg/kg measured with respect to the weight of the chemical element phosphorus present in 1 kg.

In a preferred embodiment, the product has a relatively low salt content as measured by a EC-level of at most 4, 3,2,1, as e.g. measured with an EC meter in mS/cm (milli siemens per centimetre). Preferably, the product is as obtainable or as obtained according to the method of the present disclosure.

The physical properties of the product may rely on the characteristics of the input material. Residues of anaerobic digestion plants treating manure and fibrous organic materials such residues, have been shown to be a suitable feedstock for the production of potting soil using the method according to the present disclosure.

The present disclosure further provides for a container comprising the slurry as obtained in step (b) and as described in detail herein before, for example an acetic sulphate-containing slurry with organic matter, wherein the slurry has a water content of at least 70, 75, or 80, 85 wt.% and further comprises calcium sulphate and/or iron sulphate.

The container can be a vessel and/or reactor comprising an agitator or another stirring means and/or may contain at least 50, 100, 500, 1000, 5000 L or at least 50, 100, 500, 1000, 5000 kg slurry.

Preferably, the container has a feed line comprising sulphate-containing aqueous solution, wherein the feed line is from, or connected to, a solid-liquid separator, preferably a screw press or centrifuge, such that a flow of said solution from the solid-liquid separator to the container may be effected.

Accordingly, in step (d) and/or step (c") of the method according to the present disclosure obtains sulphate-containing liquid fraction which is reused in step (b) and/or step (c') as the aqueous solution. As such, in the present disclosure, the process water can be continuously reused thereby preventing the production of a waste stream.

Preferably, the sulphate-containing liquid fraction as obtained in step (d) is reused in step (c') as the aqueous solution, and/or liquid fraction as obtained in step (c") is reused in step (b).

After and/or before any of steps (a), (b), (c), (c'), (c"), (c‴), (cʺʺ), (d), additional step(s) may be present wherein the input and/or output of any of steps (a), (b), (c), (c'), (c"), (c‴), (cʺʺ), (d) is (additionally) processed. Additionally and/or alternatively, the method may use a different order of the steps (a), (b), (c), (c'), (c"), (c"), (cʺʺ), (d), although preferably the order (sequence) is as specifically phrased herein, i.e. (a), (b), (c), (c'), (c"), (c‴), (cʺʺ), and/or (d). Further, in any of the steps (a), (b), (c), (c'), (c"), (c‴), (cʺʺ), (d), agitation means or stirring means may be provided.

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

### Brief description of the figures

Figure 1: Schematic overview of an example installation including sampling points, according to an embodiment of the present disclosure.
Figure 2: Model calculation of the dissolved Ca³"³ concentration as a function of the dissolved SO₄ concentration in equilibrium with gypsum (CaS04.H20, log Kso=4.61).

The following Example illustrates different embodiments of the present disclosure.

### Example

### P-recovery from solid fraction of digestate

### Method

Feed material was used which consisted of a solid fraction of digestate from an anaerobic mesophilic digester which had treated pig manure. The liquid digestate was separated into a solid and a liquid fraction by a decanter. The solid fraction was treated with a pilot installation which consisted of an acidification tank, a 150 mµ screw press, and a precipitation tank. The process was operated batch-wise, each batch treating 500 kg of solid feed material. The solid fraction was treated twice in the acidification and leaching step.

The solid fraction was mixed with process water from the second leaching step of the previous batch in a 1:4 v/v ratio. This slurry was acidified to pH 5 using sulphuric acid and thereafter separated by a screw press. The liquid fraction was fed into the precipitation tank and the solid fraction was leached again with an acidic solution however not using the effluent of the precipitation tank brought to pH 5 using sulphuric acid. In the precipitation tank, phosphorus was recovered as calcium phosphate through addition of calcium-hydroxide. The calcium phosphate sludge was allowed to settle for at least twelve hours and thereafter, the clear effluent was pumped and re-used in the process. The process was run for eight days (eight batches) and, for each batch, flow rates were determined and samples from intermediate- and end products were analyzed. These data were used to construct a mass balance of the overall process (Table 2).

### Results

Table 1 gives the composition of the ingoing solid fraction and the end product. The phosphorus content of the solid fraction was reduced from 7.8 g/kg to 1.2 g/kg which allows the product to be used as an organic soil improver in regions were application of organic fertilizers such as manure is restricted by P-application limits.

**Table 1 Composition of the solid fraction of digestate from pig manure and coproducts**

| | **d**.**m**. | **OM** | **P** | **Ca** | **Mg** | **K** | **S** |
|---|---|---|---|---|---|---|---|
| *Composition (B80)* | (%) | (%) | (g/kg) | (g/kg) | (g/kg) | (g/kg) | (g/kg) |
| *Feed* | 31.2 | 74 | 7.8 | 7.8 | 5.3 | 5.1 | 1.8 |
| *P-poor end product* | 32 | 88 | 1.2 | 3.8 | 0.8 | 1.0 | 4.2 |

The process mass balance is given in Table 2. Over 90% of the phosphorus is removed from the solid fraction and recovered as calcium phosphate. In the acidification tank, calcium levels rise due to dissolution of calcium phosphate from the seed. Sulphuric acid precipitates with calcium. Gypsum forms fine particles which easily pass the 150 pm filter of the screw press. Hence, gypsum is recovered upon settling of the calcium phosphate sludge. Optionally, a settler could be placed in between the screw press and the precipitation tank in order to remove and recover gypsum as a separate product prior to the phosphorus recovery step.

**Table 2 Mass balance of the pilot-scale P-extraction and recovery experiment.s3. Ingoing solid fraction and end products In bold**

| **Sampling point** | **Flow** | **Mass** | **Dry Matter** | **Org. Matter** | **P** | **Ca** | **Mg** | **S** |
|---|---|---|---|---|---|---|---|---|
| | | **Kg** | **Kg** | **Kg** | **Kg** | **Kg** | **Kg** | **Kg** |
| IN | Feed (SF Digestate) | 1000 | 239 | 178 | 6.3 | 6.5 | 4.0 | 1.9 |
| IN | Sulphuric Acid, 50% | 77 | 39 | 0.0 | 0 | 0 | 0 | 12.7 |
| IN | Groundwater | 1496 | 0 | 0 | 0 | 0 | 0 | 0 |
| IN | Ca-hydroxide | 65.3 | 19.6 | 0.0 | 0 | 9.4 | 0 | 0 |
| OUT | Ca∼P∼S product | 2194 | 142 | 61 | 6.3 | 13.5 | 4.2 | 13.6 |
| OUT | P-poor organic matter | 388 | 126 | 110 | 0.5 | 1.5 | 0.3 | 1.6 |

### Enhanced struvite formation through fixation of competing ions with sulphate

An improved strategy for the recovery of phosphorus with calcium-hydroxide, as is described in the above given example, is the recovery of phosphorus with magnesium-hydroxide to form struvite. An advantage of struvite formation is that struvite forms crystals which are easily dewatarable whereas dewatering of calcium phosphate requires a thermal drying step.

Struvite recovery is a well-known process which is already operated in full-scale reactors for decades. However, all existing struvite installations treat alkaline, calcium-poor waste streams. So far, struvite recovery has never been successful on acid, calcium-rich or iron-rich streams because calcium and iron interfere with struvite formation. This issue is solved by the use of sulphuric acid and/or recirculation of sulphate-containing process water which leads to conditions under which nearly all calcium is bound with sulphate in the form of gypsum and hence, does not interfere with the struvite precipitation process.

Struvite precipitation experiments were performed in the lab in a continuously fed 1L reactor. The reactor was fed with liquid fraction collected from the pilot plant which is described above. The pH was kept at pH 7-7.5 through the addition of Mg(OH)₂. The hydraulic retention time amounted to 4 hours whereas the struvite sludge was maintained in the reactor over the course of the experiment (two days). Table 3 shows the influent and effluent composition and the calculated purity of the precipitated phosphate minerals. The influent contains a high concentration of phosphate as well as sulphate and calcium. The formed phosphorus precipitate consists for 90-100% of struvite despite the very high calcium concentration and the very high initial molar Ca/P of 0.7. Apparently, only truly dissolved calcium can interfere with struvite formation whereas the liquid fraction contains dominantly calcium in the form of fine gypsum particles which surprisingly did not interfere with struvite formation. This is further supported by model calculations in Figure 2.

**Table 3 Results of struvite precipitation test using Influent, rich In phosphate and sulphate, obtained after extraction of manure with sulphuric acid**

| | P | Mg | Ca | S | N-0NH4 | P-PO4 | Struvite purity |
|---|---|---|---|---|---|---|---|
| Influent (mmol/l) | 49 | 45 | 34 | 150 | 112 | 49 | |
| Effluent (mmol/l) | 1 | 52 | 25 | 150 | 51 | 0 | |
| Removal (mmol/l) | 48 | | 9 | | 61 | 49 | 90-100% |

| | | | | | | | |
|---|---|---|---|---|---|---|---|
| * purity calculated from the ratio between the removed NH4 and PO4. | | | | | | | |

The principle of calcium fixation by sulphate is shown in Figure 2 were the dissolved calcium concentration of the liquid fraction in the feed of the struvite reactor is shown as a function of the dissolved sulphate concentration. The line gives the predicted calcium concentration in equilibrium with the mineral gypsum (log Kso:4.6) which was modelled using a geochemical equilibrium model Orchestra (version 2018) and therein used database for chemical speciation- and precipitation reactions (freely available via http://orchestra.meeussen.nl/). Figure 2 shows a strong decrease in soluble calcium with an increase in soluble sulphate. The lowest sulphate concentration corresponds to a situation in which no sulphuric acid but another acid would be used f.e. hydrochloric acid or nitric acid The higher sulphate concentrations correspond to a situation in which sulphuric acid is used and in which the process water is reused within the process.

Table 4 gives the calculated composition including Ca/P ratio for three scenario's: (i) nitric acid instead of sulphuric acid, (ii) sulphuric acid without recirculation of process water and (iii) sulphuric acid plus recirculation of process water. If one would use nitric acid instead of sulphuric acid, and apply reuse of sulphate-containing process water, the calcium concentration would be lowered until a value of >54 mmol/l which would limit the formation of struvite formation due to the still relatively high Ca/P ratio. Using sulphuric acid in a system without recirculation of sulphate-containing process water leads to gypsum formation and hence a reduction of the Ca/P ratio to 0.2. Upon recirculation of sulphate-rich waste water, the sulphate concentration increases further and hence, the Ca/P ratio decreases towards 0.06 mol/mol. This allows for optimal struvite formation without interference of calcium.

**Table 4 Predicted speciation of the acid liquid fraction extracted from manure (feed of the struvite reactor) for three scenario's: (I) nitric acid instead of sulphuric acid, (ii) sulphuric acid without recirculation of process water and (iii) sulphuric acid plus recirculation of process water.**

| **Scenario:** | **HNO₃ recirculation** | **H₂SO₄ No recirculation** | **H₂SO₄ recirculation** |
|---|---|---|---|
| PH (-) | 5 | 5 | 5 |
| P-PO₄ (mmol/l) | 86 | 86 | 86 |
| Ca (mmol/l) | 54 | 20 | 5 |
| S-SO₄ (mmol/l) | <15 | 75 | 430 |
| Ca/P ratio (mol/mol) | 0.62 | 0.23 | 0.06 |

### Recovered organic fibres as alternative for peat In potting soil

Table 5 gives the properties of the organic fibres produced in the above described pilot installation. Sulphate-containing process water was reused and phosphorus was recovered with Ca(OH)₂ in the form of a slurry with 9% dry matter. When the dewatering of the phosphorus product is improved, for example through formation of struvite, the water balance of the plant will change due to a lower inflow of clean water which causes the EC value of the organic fibres to rise. In that case, an additional leaching step to remove excess amount of salt is preferred in order to meet the demands for potting soil. Physical properties, stability, pH, nutrient composition and EC-value fall within the range required for potting soil ingredients.

**Table 5 Composition of the recovered organic fibres and criteria for peat-like substances In potting soil.**

| **Parameter** | **Unit** | **Organic Fibres** | **Criteria potting sooil mixture** |
|---|---|---|---|
| Dry matter | %-w/w | 38 | **-** |
| Organic matter | %-w/w | 89 | - |
| Dry Bulk density | Kg/m³ | 142 | - |
| pH | - | 5.6 | 5-6 |
| EC | mS/cm | 2.6 | <1* |
| P | g/kg | 2.4 | - |
| Na | mmol/L | 2.8 | <1.0 |
| Oxygen Consumption Rate | mmol O2/h | 14 | <15 |
| Maximum water | % v/v | 89 | >50 |
| Easily available water | % | 48 | >25 |
| Pore volume | % | 91 | >60 |

## Claims

1. Method for extracting phosphorus from organic matter, the method comprising:
(a) providing phosphorus-containing organic matter, wherein the organic matter further contains calcium and/or iron;
(b) combining the organic matter provided in step (a) with acidic sulphate-containing aqueous solution to solubilize phosphorus, to allow calcium sulphate in the form of suspended gypsum particles and/or iron sulphate to form, thereby obtaining a slurry;
(c) separating the slurry obtained in step (b) into a solid fraction having a water content of at most 80 wt.%, and a liquid fraction having a water content of at least 80 wt.%;
(c') combining the solid fraction obtained in step (c) with acidic aqueous solution to solubilize phosphorus, thereby obtaining a slurry;
(c") separating the slurry obtained in step (c') into a solid fraction having a water content of at most 80 wt.%, and a liquid fraction having a water content of at least 80 wt.%;
(d) combining the liquid fraction as obtained in step (c) with magnesium-containing base to obtain struvite precipitate,
wherein step (d) and/or step (c") obtains sulphate-containing liquid fraction which is reused in step (b) and/or step (c') as the aqueous solution, and
wherein step (c) and/or step (c") is performed by means of a solid-liquid separator, preferably a screw press or a centrifuge.

2. Method according to claim 1, wherein the amount of sulphate used in step (b) is such that at least 80% wt. of the calcium and/or iron is bound by forming calcium sulphate and/or iron sulphate.

3. Method according to claim 1, wherein the solid fraction of step (c') contains calcium and/or iron, and wherein the aqueous solution in step (c') is sulphate-containing aqueous solution to allow calcium sulphate and/or iron sulphate to form.

4. Method according to claim 3, wherein the amount of sulphate is such that at least 80% wt. of the calcium and/or iron of the solid fraction is bound by forming calcium sulphate and/or iron sulphate.

5. Method according to any one of the preceding claims, wherein
- the acidic aqueous solution in step (b) and/or step (c') is obtained by addition of inorganic acid, preferably sulphuric acid.

6. Method according to any one of the preceding claims, wherein
- the magnesium-containing base in step (d) is magnesium hydroxide and/or wherein step (d) is performed in the presence of ammonium.

7. Method according to any one of the preceding claims, wherein the phosphorus-containing organic matter provided in step (a) contains
- between 0.01 and 5 wt.% phosphorus;
- between 1 and 15 wt.% calcium; and/or
- between 1 and 15 wt.% iron.

8. Method according to any one of the preceding claims, wherein step (d) is performed in a conus-shaped reactor.

9. Method according to any one of the preceding claims, wherein the phosphorus-containing organic matter provided in step (a) is sewage sludge and/or animal excrements, preferably pig manure and/or cow manure.

10. Method according to any one of the preceding claims, wherein at least 50 wt.% of the phosphorus-containing matter provided in step (a) has been subjected to
- anaerobic digestion, preferably to increase inorganic phosphorus content;
- solid-liquid separation, preferably to reduce ammonium content and/or hydrogen carbonate content; and/or
- heat treatment, wherein the phosphorus-containing matter provided in step (a) is heated to a temperature of between 50-100 °C.

11. Method according to any one of claims 1-10, wherein the solid fraction as obtained in step (c") is suitable as organic soil improver.

12. Method according to any one of claims 1-10, comprising, after step (c"):
(c‴) combining the solid fraction as obtained in step (c") with aqueous solution to obtain a slurry;
(cʺʺ) separating the slurry obtained in step (c‴) into a solid fraction having a water content of at most 80 wt.%, and a liquid fraction having a water content of at least 80 wt.%.

13. Method according to claim 12, wherein the solid fraction as obtained in step (cʺʺ) is suitable as peat substitute and/or potting soil.

## Patentansprüche

1. Verfahren zur Extraktion von Phosphor aus organischem Material, wobei das Verfahren Folgendes umfasst:
(a) Bereitstellen von phosphorhaltigem organischem Material, wobei das organische Material ferner Calcium und/oder Eisen enthält;
(b) Kombinieren des in Schritt (a) bereitgestellten organischen Materials mit saurer, sulfathaltiger wässriger Lösung, um den Phosphor zu solubilisieren, um die Bildung von Calciumsulfat in Form von suspendierten Gipspartikeln und/oder Eisensulfat zu ermöglichen, wodurch eine Slurry erhalten wird;
(c) Trennen der in Schritt (b) erhaltenen Slurry in eine feste Fraktion mit einem Wassergehalt von höchstens 80 Gew.-%, und eine flüssige Fraktion mit einem Wassergehalt von mindestens 80 Gew.-%;
(c') Vereinigen der in Schritt (c) erhaltenen festen Fraktion mit saurer wässriger Lösung, um Phosphor zu solubilisieren, wodurch eine Slurry erhalten wird;
(c") Trennen der in Schritt (c') erhaltenen Slurry in eine feste Fraktion mit einem Wassergehalt von höchstens 80 Gew.-% und eine flüssige Fraktion mit einem Wassergehalt von mindestens 80 Gew.-%;
(d) Vereinigen der in Schritt (c) erhaltenen flüssigen Fraktion mit einer magnesiumhaltigen Base, um ein Struvit-Präzipitat zu erhalten,
wobei in Schritt (d) und/oder Schritt (c") eine sulfathaltige flüssige Fraktion erhalten wird, die in Schritt (b) und/oder Schritt (c') als die wässrige Lösung wiederverwendet wird, und
wobei Schritt (c) und/oder Schritt (c") mittels eines Fest-Flüssig-Abscheiders, vorzugsweise einer Schneckenpresse oder einer Zentrifuge, durchgeführt wird.

2. Verfahren nach Anspruch 1, wobei die Menge des in Schritt (b) verwendeten Sulfats so bemessen ist, dass mindestens 80 Gew.-% des Calciums und/oder Eisens durch Bildung von Calciumsulfat und/oder Eisensulfat gebunden werden.

3. Verfahren nach Anspruch 1, wobei die feste Fraktion von Schritt (c') Calcium und/oder Eisen enthält und wobei die wässrige Lösung in Schritt (c') eine sulfathaltige wässrige Lösung ist, um die Bildung von Calciumsulfat und/oder Eisensulfat zu ermöglichen.

4. Verfahren nach Anspruch 3, wobei die Menge an Sulfat so bemessen ist, dass mindestens 80 Gew.-% des Calciums und/oder Eisens der festen Fraktion durch Bildung von Calciumsulfat und/oder Eisensulfat gebunden werden.

5. Verfahren nach einem der voranstehenden Ansprüche, wobei
- die saure wässrige Lösung in Schritt (b) und/oder Schritt (c') durch Zugabe von anorganischer Säure, vorzugsweise Schwefelsäure, erhalten wird.

6. Verfahren nach einem der voranstehenden Ansprüche, wobei
- die magnesiumhaltige Base in Schritt (d) Magnesiumhydroxid ist und/oder wobei Schritt (d) in Gegenwart von Ammonium durchgeführt wird.

7. Verfahren nach einem der voranstehenden Ansprüche, wobei das in Schritt (a) bereitgestellte phosphorhaltige organische Material
- zwischen 0,01 und 5 Gew.-% Phosphor;
- zwischen 1 und 15 Gew.-% Calcium; und/oder
- zwischen 1 und 15 Gew.-% Eisen
enthält.

8. Verfahren nach einem der voranstehenden Ansprüche, wobei Schritt (d) in einem konusförmigen Reaktor durchgeführt wird.

9. Verfahren nach einem der voranstehenden Ansprüche, wobei es sich bei dem in Schritt (a) bereitgestellten phosphorhaltigen organischen Material um Klärschlamm und/oder tierische Exkremente, vorzugsweise Schweinemist und/oder Kuhmist, handelt.

10. Verfahren nach einem der voranstehenden Ansprüche, wobei mindestens 50 Gew.-% des in Schritt (a) bereitgestellten phosphorhaltigen Materials einer
- anaeroben Vergärung, vorzugsweise zur Erhöhung des anorganischen Phosphorgehalts;
- Fest-Flüssig-Trennung, vorzugsweise zur Verringerung des Ammoniumgehalts und/oder des Hydrogencarbonatgehalts; und/oder
- Wärmebehandlung, wobei das in Schritt (a) bereitgestellte phosphorhaltige Material auf eine Temperatur zwischen 50-100 °C erhitzt wird;
unterzogen wurde.

11. Verfahren nach einem der Ansprüche 1-10, wobei die in Schritt (c") erhaltene feste Fraktion als organisches Bodenverbesserungsmittel geeignet ist.

12. Verfahren nach einem der Ansprüche 1-10, umfassend nach Schritt (c"):
(c‴) Vereinigen der in Schritt (c") erhaltenen festen Fraktion mit wässriger Lösung, um eine Slurry zu erhalten;
(cʺʺ) Trennen der in Schritt (c‴) erhaltenen Slurry in eine feste Fraktion mit einem Wassergehalt von höchstens 80 Gew.-% und eine flüssige Fraktion mit einem Wassergehalt von mindestens 80 Gew.-%.

13. Verfahren nach Anspruch 12, wobei die in Schritt (cʺʺ) erhaltene feste Fraktion als Torfersatz und/oder Blumenerde geeignet ist.

## Revendications

1. Procédé d'extraction du phosphore dans des matières organiques, le procédé comprenant :
(a) fournir une matière organique contenant du phosphore, où la matière organique contient en outre du calcium et/ou du fer ;
(b) combiner la matière organique fournie à l'étape (a) avec une solution aqueuse acide contenant du sulfate pour solubiliser le phosphore, pour permettre au sulfate de calcium sous la forme de particules de gypse en suspension et/ou de sulfate de fer de se former, obtenant ainsi un slurry ;
(c) séparer le slurry obtenu à l'étape (b) en une fraction solide ayant une teneur en eau d'au plus 80 % en poids, et une fraction liquide ayant une teneur en eau d'au moins 80 % en poids ;
(c') combiner la fraction solide obtenue à l'étape (c) avec une solution aqueuse acide pour solubiliser le phosphore, obtenant ainsi un slurry ;
(c") séparer le slurry obtenu à l'étape (c') en une fraction solide ayant une teneur en eau d'au plus 80 % en poids, et une fraction liquide ayant une teneur en eau d'au moins 80 % en poids ;
(d) combiner la fraction liquide comme obtenue à l'étape (c) avec une base contenant du magnésium pour obtenir un précipité de struvite,
où l'étape (d) et/ou l'étape (c") obtient une fraction liquide contenant du sulfate qui est réutilisée à l'étape (b) et/ou l'étape (c') comme la solution aqueuse, et
où l'étape (c) et/ou l'étape (c") est effectuée au moyen d'un séparateur solide-liquide, de préférence une presse à vis ou une centrifugeuse.

2. Procédé selon la revendication 1, où la quantité de sulfate utilisée à l'étape (b) est telle qu'au moins 80 % en poids du calcium et/ou du fer est lié en formant du sulfate de calcium et/ou du sulfate de fer.

3. Procédé selon la revendication 1, où la fraction solide de l'étape (c') contient du calcium et/ou du fer, et où la solution aqueuse à l'étape (c') est une solution aqueuse contenant du sulfate pour permettre au sulfate de calcium et/ou au sulfate de fer de se former.

4. Procédé selon la revendication 3, où la quantité de sulfate est telle qu'au moins 80 % en poids du calcium et/ou du fer de la fraction solide est liée en formant du sulfate de calcium et/ou du sulfate de fer.

5. Procédé selon l'une quelconque des revendications précédentes, où
- la solution aqueuse acide à l'étape (b) et/ou à l'étape (c') est obtenue en ajoutant un acide inorganique, de préférence un acide sulfurique.

6. Procédé selon l'une quelconque des revendications précédentes, où
- la base contenant du magnésium à l'étape (d) est de l'hydroxyde de magnésium et/ou où l'étape (d) est effectuée en présence d'ammonium.

7. Procédé selon l'une quelconque des revendications précédentes, où la matière organique contenant du phosphore fournie à l'étape (a) contient
- entre 0,01 et 5 % en poids de phosphore ;
- entre 1 et 15 % en poids de calcium ; et/ou
- entre 1 et 15 % en poids de fer.

8. Procédé selon l'une quelconque des revendications précédentes, où l'étape (d) est effectuée dans un réacteur en forme de cône.

9. Procédé selon l'une quelconque des revendications précédentes, où la matière organique contenant du phosphore fournie à l'étape (a) est des boues d'épuration et/ou des excréments d'animaux, de préférence du fumier de porc et/ou du fumier de vache.

10. Procédé selon l'une quelconque des revendications précédentes, où au moins 50 % en poids de la matière contenant du phosphore fournie à l'étape (a) a été soumise à
- digestion anaérobique, de préférence pour augmenter la teneur en phosphore inorganique ;
- séparation solide-liquide, de préférence pour réduire la teneur en ammonium et/ou la teneur en hydrogénocarbonate ; et/ou
- un traitement thermique, où la matière contenant du phosphore fournie à l'étape (a) est chauffée à une température entre 50 et 100 °C.

11. Procédé selon l'une quelconque des revendications 1 à 10, où la fraction solide comme obtenue à l'étape (c") est appropriée comme amendement organique des sols.

12. Procédé selon l'une quelconque des revendications 1 à 10, comprenant, après l'étape (c") :
(c‴) combiner la fraction solide comme obtenue à l'étape (c") avec une solution aqueuse pour obtenir un slurry ;
(c"") séparer le slurry obtenu à l'étape (c‴) en une fraction solide ayant une teneur en eau d'au plus 80 % en poids, et une fraction liquide ayant une teneur en eau d'au moins 80 % en poids.

13. Procédé selon la revendication 12, où la fraction solide comme obtenue à l'étape (c"") est appropriée comme substitut de tourbe et/ou de terreau.
